# EUROPEAN PATENT APPLICATION

(11) **EP 2 535 645 A2**
(43) Date of publication of application: **19.12.2012**
(21) Application number: 12171260.8
(22) Date of filing: 08.06.2012
(51) Int. Cl.: F23R 3/00, F23M 5/00

(54) **Cell structure thermal barrier coating**

(30) Priority: 16.06.2011 US 201113162009
(71) Applicant: United Technologies Corporation, Hartford, CT 06101 (US)
(72) Inventor: Dierberger, James A., Hebron, CT Connecticut 06248 (US)
(74) Representative: Leckey, David Herbert

(57) **Abstract**

A combustor component (74) of a gas turbine engine includes a thermal barrier coating (78) on a substrate (76). The thermal barrier coating (78) defines a multiple of cells (82).

## Description

### BACKGROUND

The present disclosure relates to a thermal barrier coating, and more particularly to a combustor with a thermal barrier coating.

A gas turbine engine includes a compressor for compressing air which is mixed with a fuel and channeled to a combustor wherein the mixture is ignited within a combustion chamber to generate hot combustion core gases. At least some combustors include combustor liners to channel the combustion gases to a turbine which extracts energy from the combustion core gases to power the compressor, as well as produce useful work to propel an aircraft in flight or to power a load, such as an electrical generator.

The combustor liners often include a thermal barrier coating to increase durability. The difference in properties between the ceramic thermal barriers and the metal substrates to which the ceramic is applied may lead to mismatched strains which ultimately lead to areas of coating spallation which may tend to spall or flake. Once spalled, substrate degradation in the form of cracking and oxidation may follow.

### SUMMARY

A component of a gas turbine engine according to an exemplary aspect of the present disclosure includes a thermal barrier coating on a substrate, the thermal barrier coating defines a multiple of cells.

A combustor component of a gas turbine engine according to an exemplary aspect of the present disclosure includes a substrate which defines a multiple of offsets and a thermal barrier coating on the substrate, the thermal barrier coating defines a multiple of cells, each of the multiple of cells correspond with at least one of the multiple of offsets.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is a perspective partial sectional view of an exemplary annular combustor that may be used with the gas turbine engine shown in Figure 1;
Figure 3 is a cross-sectional view of an exemplary combustor that may be used with the gas turbine engine shown in Figure. 2;
Figure 4 is a facial view of a combustor component;
Figure 5 is a cross-sectional view of one non-limiting embodiment of the combustor component; and
Figure 6 is a cross-sectional view of another non-limiting embodiment of the combustor component.

### DETAILED DESCRIPTION

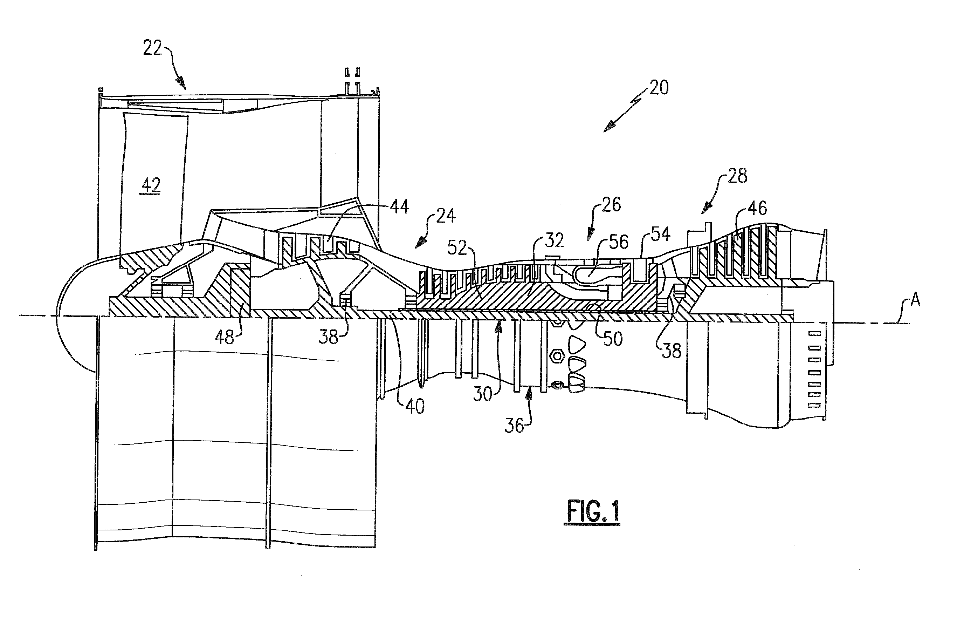

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 54, 46 rotationally drive the respective low speed spool 30 and high speed spool 32 in response to the expansion.

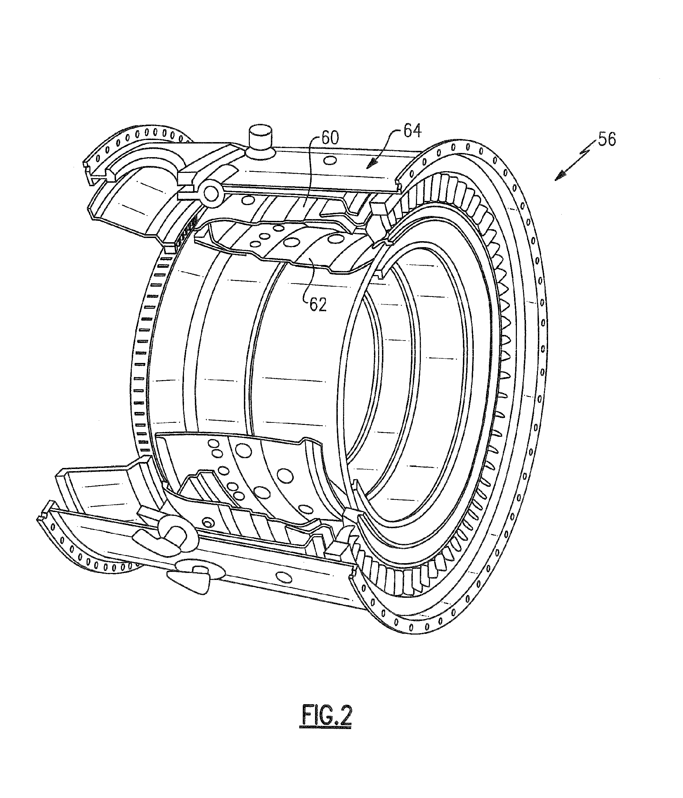

With reference to Figure 2, the combustor 56 generally includes an outer liner 60 and an inner liner 62. It should be understood that various combustor arrangements such as a can combustor as well as other high temperature components such as turbine components may alternatively benefit herefrom.

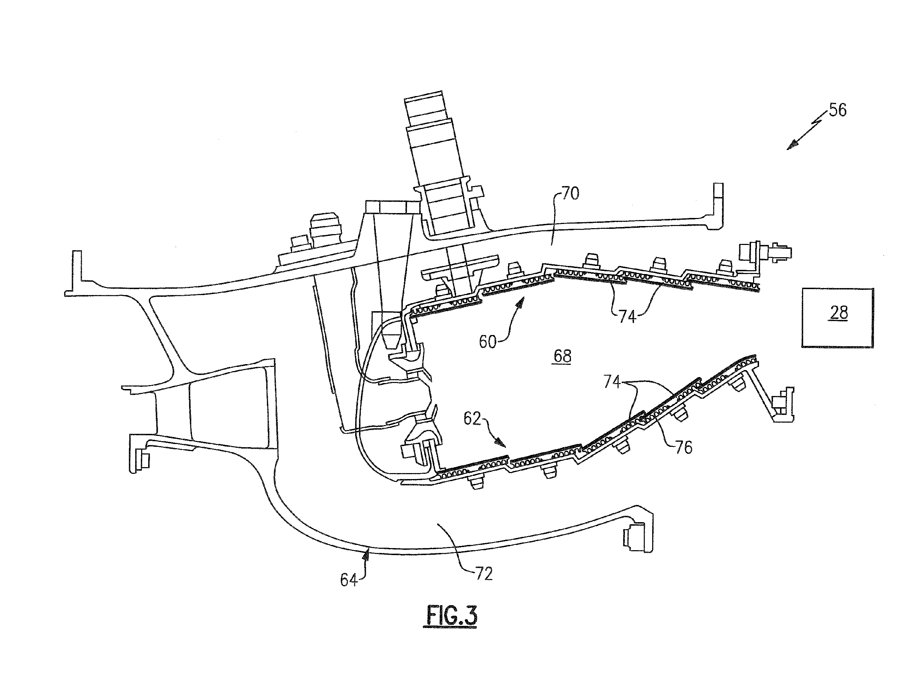

With reference to Figure 3, outer liner 60 and inner liner 62 are spaced inward from a combustor case 64 such that a combustion chamber 68 is defined between liners 60, 62. The outer liner 60 and combustor case 64 define an outer passageway 70. The inner liner 62 and combustor case 64 define an inner passageway 72. Combustion chamber 68 is generally annular in shape and is defined between liners 60, 62. Outer and inner liners 60, 62 extend toward the turbine section 28.

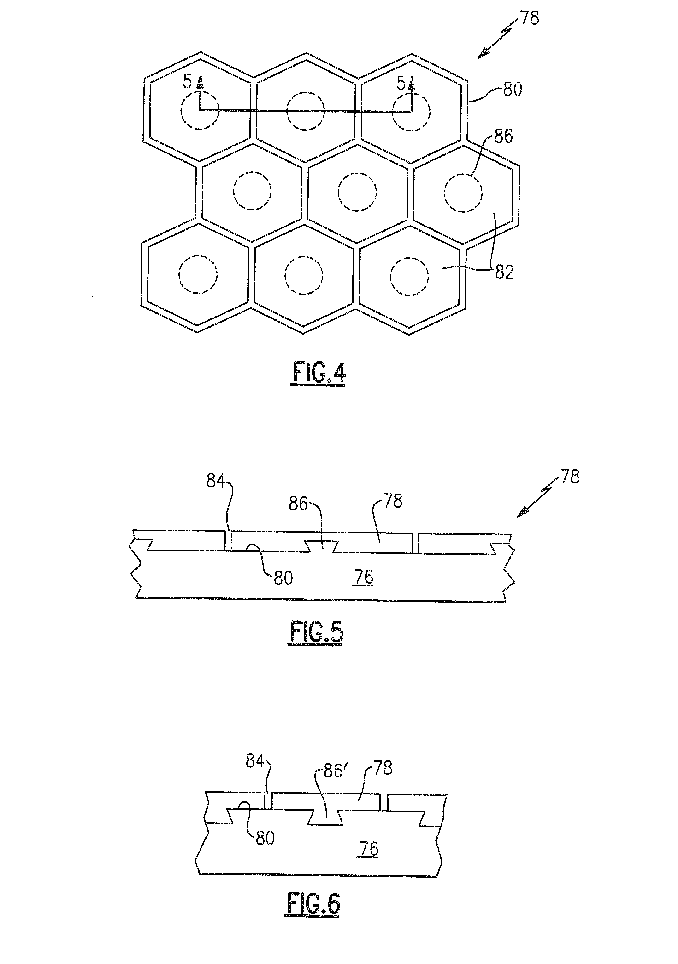

The outer and inner liners 60, 62 support a multiple of liner panels 74. Each liner panel 74 generally includes a metallic substrate 76 with a thermal barrier coating 78 (Figure 4) on an inner surface 80 which faces the combustion chamber 68 (Figure 5). It should be understood that although a particular combustor is illustrated, other combustor types with various combustor liner panel arrangements will also benefit herefrom. It should be further understood that the disclosed liner panel is but a single illustrated embodiment and should not be limited only thereto such that the disclosed liner panel 74 may be considered but one combustor component of various types manufactured of a substrate 76 upon which the thermal barrier coating 78 is applied as disclosed herein.

The substrate 76 may be a nickel base superalloy, other metallic material, or Ceramic Matrix Composite material. The thermal barrier coating 78 may be applied in, for example, a plasma spray coating process in which powders are injected into a high temperature, high velocity stream of ionized gases. At the point where the powders are injected into the gas stream, the temperature can be about 15,000.degrees F (8315 C). As a result, the powders are typically molten when they strike the surface of the substrate forming an interlocking "splat" type structure. It should be understood that the thermal barrier coating 78 may be sprayed on a bondcoat which has been applied to the substrate 76 which has been found to improve adhesion and is well known in the industry.

With reference to Figure 4, the thermal barrier coating 78 is applied to the substrate 76 (Figure 5) in a manner to form a grid pattern which includes a multiple of cells 82 each separated by a narrow gap 84 (also illustrate in Figure 5). The gap 84 may be formed to be exceedingly narrow yet still facilities thermal barrier coating 78 strain tolerance as the gaps 84 define the maximum size of potential 'mudflat' cracks that may occur due to sintering. This segregation facilitates durability and accommodation of thermal gradients.

Each cell 82 may be of a particular shape such as hexagonal (shown), square, triangular or other shape. In one non-limiting embodiment, each cell 82 may be of approximately 0.25 inches (6.35 mm) across opposed corners of the illustrated hexagonal shape.

The multiple of cells 82 with the respective narrow gap 84 may be manufactured, for example, with a matrix grid of a polyester fugitive material which is applied over the substrate 76 prior to the "splat" type plasma spray process then thereafter baked out to form the gaps 84. The gap 84 could be as narrow as a crack and still provide a measure of strain relief and durability improvement such that an alternative thermal process may include a laser treatment to pre-treat the ceramic and produce the matrix grid of gaps 84. It should be understood that various processes may alternatively or additionally be utilized to essentially mask or mark the substrate 76 to form the matrix grid of gaps 84.

An offset 86 interfaces with each of the multiple of cells 82. The offset 86 may extend outward from the surface 80 of the substrate 76 to form a post which extends into the thermal barrier coating 78 (Figure 5). Alternatively, an offset 86' may extend into the surface 64 of the substrate 76' to form a divot which at least partially receives the thermal barrier coating 78 (Figure 6). In one disclosed non-limiting embodiment, the offset 86, 86' defines a reverse taper such as a frustro-conical structure relative to the surface 80 of the substrate 76 that is two-thirds (2/3) the thickness of the thermal barrier coating 78 to form an interlock for the thermal barrier coating 78 at each cell 82.

The offset 86, 86' provides a reference point about which sintering shrinkage of the thermal barrier coating 78 will interlock to facilitate adhesion of the thermal barrier coating 78 to the substrate 76. That is, the thermal barrier coating 78, when sintered, mechanically interlocks onto the post or into the divot. This mechanical interlock significantly increases the life of the thermal barrier coating 78 and therefore increases the life of the components onto which the thermal barrier coating 78 is applied. As each cell 82 is provided with an offset 86, 86', adhesion to the substrate 76 is supplemented and the thermal barrier coating 78 may last for the entire life of the component which is protected thereby.

It should be understood that relative positional terms such as "forward," "aft," "upper," "lower," "above," "below," and the like are with reference to the normal operational attitude of the vehicle and should not be considered otherwise limiting.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A component (74) of a gas turbine engine comprising:
a substrate (76); and
a thermal barrier coating (78) on said substrate (76), said thermal barrier coating (78) defining a multiple of cells (82).

2. The component as recited in claim 1, wherein said substrate (76) defines an offset (86;86') within each of said multiple of cells (82).

3. A component as recited in claim 1 wherein:
said substrate (76) defines a multiple of offsets (86;86a); and wherein
each of said multiple of cells (82) correspond with at least one of said multiple of offsets (86;86').

4. The component as recited in claim 2, wherein said offset (86) within each of said multiple of cells (82) is a post.

5. The component as recited in claim 3, wherein at least one of said multiple of offsets (86) is a post.

6. The component as recited in claim 4 or 5, wherein said post (86) is frustro-conical.

7. The component as recited in any of claims 4 to 6, wherein said post (86) or each of said multiple of posts (86) is located within a center of each of said multiple of cells (82).

8. The component as recited in any of claims 4 to 7, wherein said post (86) defines a height that is approximately two-thirds the thickness of said thermal barrier coating (78).

9. The component as recited in claim 2, wherein said offset (86') within each of said multiple of cells is a divot.

10. The combustor component as recited in claim 3, wherein at least one of said multiple of offsets (86') is a divot.

11. The component as recited in claim 9 or 10, wherein said divot (86') or each of said multiple of divots (86') is located within a center of each of said multiple of cells (82).

12. The component as recited in any preceding claim, said substrate (76) is a nickel base superalloy.

13. The component as recited in any preceding claim, wherein each of said multiple of cells (82) are hexagonal in shape.

14. The component as recited in any preceding claim, wherein each of said multiple of cells (82) are separated by a gap (84).

15. The component as recited in any preceding claim, the component being a combustor component (74).
